# EUROPÄISCHE PATENTSCHRIFT

(11) **EP 1 192 200 B1**
(45) Veröffentlichungstag und Bekanntmachung des Hinweises auf die Patenterteilung: **23.04.2003**
(21) Anmeldenummer: 00947898.3
(22) Anmeldetag: 30.06.2000
(51) Int. Cl.: C08G 18/08, C08G 18/12, C08G 18/42, C08G 18/66, C09D 175/06

(54) **WÄSSRIGER BESCHICHTUNGSSTOFF, INSBESONDERE WÄSSRIGER FÜLLER ODER STEINSCHLAGSCHUTZGRUND**
AQUEOUS COATING MATERIAL, ESPECIALLY AQUEOUS FILLER OR PROTECTIVE BASE AGAINST STONES
MATERIAU DE REVETEMENT AQUEUX, NOTAMMENT CHARGE AQUEUSE OU BASE DE PROTECTION CONTRE LA CHUTE DE PIERRES

(30) Priorität: 02.07.1999 DE 19930555
(43) Veröffentlichungstag der Anmeldung: 03.04.2002
(73) Patentinhaber: BASF Coatings AG, 48165 Münster (DE)
(72) Erfinder: WIGGER, Georg, 48308 Senden (DE); RÖCKRATH, Ulrike, 48308 Senden (DE); WIATR, Bärbel, 48165 Münster (DE); SCHILLING, Marita, 48165 Münster (DE); STEIN, Ralf, 48153 Münster (DE)
(74) Vertreter: Fitzner, Uwe, Dr.
(86) Internationale Anmeldenummer: EP0006106
(87) Internationale Veröffentlichungsnummer: WO01002457

(56) Entgegenhaltungen:
- EP-A- 0 140 323
- EP-A- 0 669 352
- US-A- 5 589 228

## Beschreibung

Die Erfindung betrifft einen wäßrigen Beschichtungsstoff, insbesondere einen wäßrigen Füller oder Steinschlagschutzgrund, enthaltend (A) eine in Wasser dispergierbare urethangruppenhaltige hydroxyfunktionelle Bindemittelkomponente, (B) eine in Wasser dispergierbare urethangruppenhaltige Bindemittelkomponente mit blockierten Isocyanatgruppen, (C) ein in Wasser dispergierbares Aminoplastharz, (D) optional ein in Wasser dispergierbarer hydroxyfunktioneller Polyester und (E) optional lackübliche Additive. Die Erfindung betrifft weiterhin ein Verfahren zur Herstellung eines solchen Beschichtungsstoffs sowie dessen Verwendungen.

Die Bereitstellung von steinschlagfesten Beschichtungen auf metallischen Substraten ist im Bereich der Kraftfahrzeugherstellung von besonderer Bedeutung. Steinschlagfeste Beschichtungen werden insbesondere in Frontbereich sowie im Unterbodenbereich einer Kraftfahrzeugkarosserie angebracht. Ein hierfür geeigneter Beschichtungsstoff sollte aus wirtschaftlichen sowie aus ökologischen Gründen arm an oder frei von organischen Lösemitteln sein. Hierfür kommen (neben Pulverbeschichtungsstoffen) nur wäßrige Beschichtungsstoffe in Frage.

An einen Füller oder einen Steinschlagschutzgrund werden eine Reihe von Anforderungen gestellt. Er muß bei einer Temperatur von 120 - 160°C einbrennbar sein und nach solchen Einbrenntemperaturen hervorragende Eigenschaften wie hohe Steinschlagbeständigkeit (besonders die Kombination von Multi- und Monoschlag), gute Haftung zur Grundierung, beispielsweise KTL, und zum Basislack, gute Fülleigenschaften (Abdeckung der Struktur des Substrats) bei einer Schichtdicke von 20 - 35 µm sowie ein ausgezeichnetes Appearance in der abschließenden Klarlackschicht aufweisen. Die Kombination dieser Eigenschaften ist insofern schwierig zu realisieren, als es sich bei diesen Eigenschaften z.T. um einander entgegenstehende Eigenschaften handelt, bei denen die Verbesserung einer Eigenschaft automatisch eine Verschlechterung einer anderen Eigenschaft bewirkt. Solche einander entgegenstehenden oder konträren Eigenschaften sind z.B. sehr guter Multischlag und Monoschlag, niedrige Schichtdicke und sehr gute(r) Füllkraft/Decklackstand, niedrige Einbrenntemperatur und sehr guter Decklackstand sowie niedrige Einbrenntemperatur und hohe Haftung.

Ein Beschichtungsstoff der eingangs genannten Zusammensetzung ist aus der Literaturstelle EP 0 427 028 B1 bekannt. Hierbei ist die Komponente (B) das Reaktionsprodukt eines Diisocyanats und eines niedermolekularen Polyols. Bei dem bekannten Beschichtungsstoff werden nicht alle oben genannten einander entgegenstehenden Eigenschaften in befriedigendem Maß erhalten. Bezüglich eines Steinschlagschutzgrundes auf Lösemittelbasis wird beispielhaft auf die Literaturstelle DE 31 08 861 C2 verwiesen. Lösemittelbasierte Beschichtungsstoffe befriedigen allein schon aus ökologischen Gründen nicht. Aus der Literaturstelle DE 41 42 816 C1 ist ein Füller bekannt, bei welchem die eingangs genannten Komponenten (A) und (B) zunächst miteinander umgesetzt werden und das Reaktionsprodukt dann mit einem Polyisocyanat und einem Melaminharz zum applikationsfertigen Beschichtungsstoff gemischt wird. Dies ist herstellungstechnisch vergleichsweise aufwendig. Zudem werden auch mit dem bekannten Beschichtungsstoff nicht alle oben genannten einander entgegenstehenden Eigenschaften in ausreichendem Maße verwirklicht. Weitere Steinschlagschutzzusammensetzungen sind beispielsweise aus den Literaturstellen DE 38 05 629 C1 und DE 195 04 947 A1 bekannt.

Gegenüber dem eingangs genannten Stand der Technik liegt der Erfindung das technische Problem zugrunde, einen Beschichtungsstoff anzugeben, mit welchem die genannten gewünschten einander entgegenstehenden Eigenschaften in insgesamt allen Anforderungen genügender Weise erhalten werden.

Zur Lösung dieses technischen Problems lehrt die Erfindung, daß die eingangs genannte Bindemittelkomponente (B) herstellbar ist, indem
(B1) aus einem Polyol oder einer Mischung aus Polyolen sowie aus einem Polyisocyanat oder einer Mischung aus Polyisocyanaten ein isocyanatgruppenhaltiges Polyurethanpräpolymer hergestellt wird,
(B2) das isocyanatgruppenhaltige Polyurethanpräpolymer (B1) mit Hilfe eines Kettenverlängerungsmittels zu einem hydroxylgruppenhaltigen kettenverlängerten Polyurethanpräpolymer umgesetzt wird,
(B3) das hydroxylgruppenhaltige kettenverlängerte Polyurethanpräpolymer (B2) mit einem Polyisocyanat oder einer Mischung aus Polyisocyanaten zu einem weiteren isocyanatgruppenhaltigen Polyurethanpräpolymer umgesetzt wird und
(B4) ein Teil oder alle Isocyanatgruppen des isocyanatgruppenhaltigen kettenverlängerten Polyurethanpräpolymers (B3) mit einem Blockierungsmittel blockiert wird oder werden, wodurch ein Polyurethan mit blockierten Isocyanatgruppen resultiert, wonach gegebenenfalls
(B5) noch vorhandene freie Isocyanatgruppen in dem Polyurethan (B4) mit einem Kettenverlängerungsmittel umgesetzt werden.

Überraschenderweise wird durch den Einsatz der vorstehend definierten erfindungsgemäß zu verwendenden Komponente (B) in dem eingangs genannten, die Komponenten (A) und (C) sowie gegebenenfalls (D) und (E) enthaltenden Beschichtungsstoff ein Beschichtungsstoff erhalten, welcher allen Anforderungen genügt.

Die erfindungsgemäß zu verwendende Bindemittelkomponente (B) ist erhältlich, indem in einem ersten Verfahrensschritt mindestens ein Polyol mit mindestens einem Polyisocyanat zu dem isocyanatgruppenhaltigen Polyurethanpräpolymer (B1) umgesetzt wird.

Beispiele geeigneter Polyole sind gesättigte oder olefinisch ungesättigte Polyesterpolyole mit einem zahlenmittleren Molekulargewicht von 300 bis 5.000, bevorzugt 1.000 bis 2.000 und insbesondere 1.200 bis 1.600, welche durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen,
hergestellt werden.

Beispiele für geeigente Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure, Dodecandicarbonsäure oder Dimerfettsäuren oder Maleinsäure, Fumarsäure oder Itaconsäure, von denen Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Geeignet sind auch die veresterungsfähigen Derivate der obengenannten Polycarbonsäuren, wie z.B. deren ein- oder mehrwertigen Ester mit aliphatischen Alkoholen mit 1 bis 4 C-Atomen oder Hydroxyalkoholen mit 1 bis 4 C-Atomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure, Fettsäuren natürlich vorkommender Öle, Acrylsäure, Methacrylsäure, Ethacrylsäure oder Crotonsäure. Bevorzugt wird als Monocarbonsäure Isononansäure eingesetzt.

Beispiele geeigneter Polyole sind Diole und Triole, insbesondere Diole. Üblicherweise werden Triole neben den Diolen in untergeordneten Mengen verwendet, um Verzweigungen in die Polyesterpolyole einzuführen.

Geeignete Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol oder die stellungsisomeren Diethyloctandiole. Diese Diole können auch als solche für die Herstellung der erfindungsgemäß zu verwendenden Polyurethane (A) eingesetzt werden.

Weitere Beispiele geeigneter Diole sind Diole der Formel I oder II: 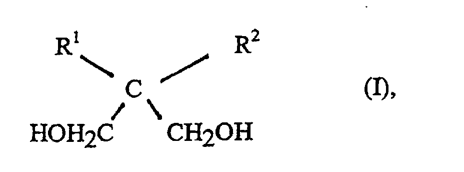 in der R¹ und R² jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R¹ und/oder R² nicht Methyl sein darf; 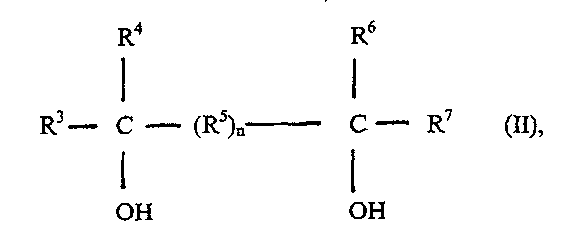 in der R³, R⁴, R⁶ und R⁷ jeweils gleiche oder verschiedene Reste darstellen und für einen Alkylrest mit 1 bis 6 C-Atomen, einen Cycloalkylrest oder einen Arylrest stehen und R⁵ einen Alkylrest mit 1 bis 6 C-Atomen, einen Arylrest oder einen ungesättigten Alkylrest mit 1 bis 6 C-Atomen darstellt, und n entweder 0 oder 1 ist.

Als Diole I der allgemeinen Formel I sind alle Propandiole der Formel geeignet, bei denen entweder R¹ oder R² oder R¹ und R² nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandio1-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3 oder 2-Cyclo-hexyl-2-methylpoopandiol-1,3 und andere.

Als Diole II der allgemeinen Formel II können beispielsweise 2,5-Dimethylhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Von diesen Diolen sind Hexandiol und Neopentylglykol besonders vorteilhaft und werden deshalb besonders bevorzugt verwendet.

Die vorstehend genannten Diole können auch als solche für die Herstellung der isocyanatgruppenhaltigen Polyurethanpräpolymere (B1) eingesetzt werden.

Beispiele geeigneter Triole sind Trimethylolethan, Trimethylolpropan oder Glycerin, insbesondere Trimethylolpropan.

Die vorstehend genannten Triole können auch als solche für die Herstellung der isocyanatgruppenhaltigen Polyurethanpräpolymere (B1) eingesetzt werden (vgl. die Patentschrift EP-A-0 339 433).

Gegebenenfalls können untergeordnete Mengen von Monoolen mit verwendet werden. Beispiele geeigneter Monoole sind Alkohole oder Phenole wie Ethanol, Propanol, n-Butanol, sec.- Butanol, tert.-Butanol, Amylalkohole, Hexanole, Fettalkohole, Allylalkohol oder Phenol.

Ganz besonders vorteilhafte Polyesterpolyole resultieren, wenn die Monomeren, aus der Gruppe bestehend aus Isophthalsäure, Dimerfettsäuren und Hexandiol, ausgewählt sind.

Die Herstellung der Polyesterpolyole kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR⁸)ₘ- CH₂-O-)- aus. Hierbei ist der

Index m bevorzugt 4 bis 6 und der Substitutent R⁸ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte epsilon-Caprolacton, bei dem m den Wert 4 hat und alle R⁸-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise epsilon-Caprolactam mit niedermolekularen Diolen hergestellt werden.

Weitere Beispiele geeigneter Polyole sind Polyetherpolyole, insbesondere mit einem zahlenmittleren Molekulargewicht von 400 bis 5.000, insbesondere von 400 bis 3.000. Gut geeignete Polyetherdiole sind z.B. Polyetherdiole der allgemeinen Formel H-(-O-(CHR⁹)ₒ-)ₚOH, wobei der Substituent R⁹ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly(oxypropylen)glykole und Poly(oxybutylen)glykole genannt.

Die Polyetherdiole sollen einerseits keine übermäßigen Mengen an Ethergruppen einbringen, weil sonst die gebildeten erfindungsgemäß zu verwendenden Polyurethane (B) in Wasser anquellen. Andererseits können sie in Mengen verwendet werden, welche die nichtionische Stabilisierung der Polyurethane (B) gewährleistet. Sie dienen dann als die nachstehend beschriebenen funktionellen nichtionischen Gruppen (b3).

Um die Dispergierbarkeit der erfindungsgemäß zu verwendenden Bindemittelkomponente (B) in einem wäßrigen Medium zu gewährleisten, werden neben den Polyolen noch Verbindungen eingebaut, durch welche stabilisierende (potentiell) ionische und/oder nichtionische funktionelle Gruppen eingeführt werden. Geeignete Gruppen dieser Art sind
(b1) funktionelle Gruppen, die durch Neutralisationsmittel und/oder Quaternisierungsmittel in Kationen überführt werden können, und/oder kationische Gruppen,
oder
(b2) funktionelle Gruppen, die durch Neutralisationsmittel in Anionen überführt werden können, und/oder anionische Gruppen,
und/oder
(b3) nichtionische hydrophile Gruppen.

Beispiele geeigneter erfindungsgemäß zu verwendender funktioneller Gruppen (b1), die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen (b1) sind primäre, sekundäre, tertiäre oder tertiäre Sulfoniumgruppen oder quaternäre Phosphoniumgruppen, vorzugsweise quaternäre Ammoniumgruppen oder quatemäre Ammoniumgruppen, tertiäre Sulfoniumgruppen, insbesondere aber tertiäre Sulfoniumgruppen.

Beispiele geeigneter erfindungsgemäß zu verwendender funktioneller Gruppen (b2), die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (b2) sind Carboxylat-, Sulfonat- oder Phosphonatgruppen, insbesondere Carboxylatgruppen.

Beispiele geeigneter Neutralisationsmittel für in Kationen umwandelbare funktionelle Gruppen (b1) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen (b2) sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen. Die Neutralisation kann in organischer Phase oder in wäßriger Phase erfolgen. Bevorzugt wird als Neutralisationsmittel Dimethylethanolamin eingesetzt.

Die insgesamt in dem erfindungsgemäßen Beschichtungsmittel eingesetzte Menge an Neutralisationsmittel wird so gewählt, daß 1 bis 100 Äquivalente, bevorzugt 50 bis 90 Äquivalente der funktionellen Gruppen (b1) oder(b2) des erfindungsgemäß zu verwendenden Polyurethans (A) neutralisiert werden.

Von diesen funktionellen (potentiell) ionischen Gruppen (b1) und (b2) und funktionellen nichtionischen Gruppen (b3) sind die (potentiell) anionischen Gruppen (b2) vorteilhaft und werden deshalb besonders bevorzugt verwendet.

Die Einführung von (potentiell) anionischen Gruppen (b2) in die Polyurethanmoleküle erfolgt über den Einbau von Verbindungen, die mindestens eine gegenüber Isocyanatgruppen reaktive und eine zur Anionenbildung befähigte Gruppe im Molekül enthalten; die einzusetzende Menge kann aus der angestrebten Säurezahl berechnet werden.

Beispiele geeigneter Verbindungen dieser Art sind solche, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Demnach können beispielsweise Alkansäuren mit zwei Substituenten am alpha-ständigem Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben 2 bis etwa 25, vorzugsweise 3 bis 10 Kohlenstoffatome. Beispiele geeigneter Alkansäuren sind Dihydroxypropionsäure, Dihydroxybernsteinsäure und Dihydroxybenzoesäure. Eine besonders bevorzugte Gruppe von Alkansäuren sind die alpha,alpha-Dimethylolalkansäuren der allgemeinen Formel R¹⁰-C(CH₂OH)₂COOH, wobei R¹⁰ für ein Wasserstoffatom oder eine Alkylgruppe mit bis zu etwa 20 Kohlenstoffatomen steht. Beispiele besonders gut geeigneter Alkansäuren sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise alpha,alpha-Diaminovaleriansäure, 3,4-Diaminobenzoesäure, 2,4-Diaminotoluolsulfonsäure und 2,4-Diaminodiphenylethersulfonsäure.

Nichtionische stabilisierende Poly(oxyalkylen)gruppen (b3) können als laterale oder endständige Gruppen in die Polyurethanmoleküle eingeführt werden. Hierfür können beispielsweise Alkoxypoly(oxyalkylen)alkohole mit der allgemeinen Formel R¹¹O-(-CH₂-CH¹²-O-)ᵣ H in der R¹¹ für einen Alkylrest mit 1 bis 6 Kohlenstoffatomen, R¹² für ein Wasserstoffatom oder einen Alkylrest mit 1 bis 6 Kohlenstoffatomen und der Index r für eine Zahl zwischen 20 und 75 steht, eingesetzt werden. (vgl. die Patentschriften EP-A-0 354 261 oder EP-A-0 424 705).

Als Polyisocyanate kommen grundsätzlich alle der üblichen und bekannten, auf dem Lackgebiet verwendeten aliphatischen, cycloaliphatischen, aliphatischcycloaliphatischen, aromatischen, aliphatisch-aromatischen und/oder cycloaliphatisch-aromatischen Polyisocyanate und Polyisocyanataddukte in Betracht, welche auch als Lackpolyisocyanate bezeichnet werden.

Beispiele geeigneter Polyisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-diisocyanat, Dicyclohexylmethan-4,4'-diisocyanat, flüssiges Dicyclohexylmethan-4,4'-diisocyanat eines trans/trans-Gehalts von bis zu 30 Gew.-%, vorzugsweise 25 Gew.-% und insbesondere 20 Gew.-%, das durch Phosgenierung von Isomerengemischen des Bis(4-aminocyclohexyl)methans oder durch fraktionierte Kristallisation von handelsüblichem Bis(4-isocyanatocyclohexyl)methan gemäß den Patentschriften DE-A-44 14 032, GB-A-1220717, DE-A-16 18 795 oder DE-A-17 93 785 erhältlich ist; Trimethylendiisocyanat, Tetramethylendiisocyanat, Pentamethylendiisocyanat, Hexamethylendiisocyanat, Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, m-Tetramethylxylylendiisocyanat (= 1,3-Bis-(2-isocyanatoprop-2-yl)-benzol oder Toluylendiisocyanat.

Beispiele geeigneter Polyisocyanataddukte sind isocyanatgruppenhaltige Polyurethanpräpolymere, die durch Reaktion von Polyolen mit einem Überschuß an Polyisocyanaten hergestellt werden können und bevorzugt niederviskos sind. Es können auch Isocyanurat-, Biuret-, Allophanat-, Iminooxadiazindion-, Urethan-, Harnstoff- Carbodiimid und/oder Uretdiongruppen aufweisende Polyisocyanate verwendet werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden hierbei die vorstehend im Detail beschriebenen Polyisocyanate verwendet.

Ganz besonders bevorzugt werden Gemische aus Uretdion-und/oder Isocyanuratgruppen und/oder Allophanatgruppen aufweisenden Polyisocyanataddukten, insbesondere Isocyanurate, insbesondere auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Vorzugsweise werden bei der Herstellung des isocyanatgruppenhaltigen Polyurethanpräpolymeren (B1) die Isocyanatgruppen in molaren Überschuß über die Hydroxylgruppen angewandt. Erfindungsgemäß ist es von Vorteil, wenn das Verhältnis von Hydroxylgruppen in den Polyolen zu Isocyanatgruppen in den Polyisocyanaten bei 1: 6 bis 1:1,1, vorzugsweise 1:5 bis 1:1,2 und insbesondere 1: 4 bis 1: 1,3 liegt. Wenn anderweitig sichergestellt ist, daß ein isocyanatgruppenhaltiges Polyurethanpräpolymer (B1) resultiert, können auch die Hydroxylgruppen im Überschuß angewandt werden.

Erfindungsgemäß wird das isocyanatgruppenhaltige Polyurethanpräpolymer (B1) in einem zweiten Verfahrensschritt mit einem geeigneten Kettenverlängerungsmittels kettenverlängert, so daß Hydroxylgruppen resultieren. Als Kettenverlängerungsmittel kommen in Frage: mindestens ein Polyol mit einer Funktionalität von 2 bis 4, mindestens ein Polyamin und/oder mindestens ein Alkanolamin. Der Einsatz der Polyole, Polyamine und Aminoalkohole führt zur Molekulargewichtserhöhung der Polyurethane (B).

Geeignete Polyole für die Kettenverlängerung sind Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A oder deren Mischungen (vgl. auch die Patentschriften EP-A- 0 339 433, EP-A- 0 436 941, EP-A- 0 517 707).

Beispiele geeigneter Polyamine weisen mindestens zwei primäre und/oder sekundäre Aminogruppen auf. Polyamine sind im wesentlichen Alkylenpolyamine mit 1 bis 40 Kohlenstoffatomen, vorzugsweise etwa 2 bis 15 Kohlenstoffatomen.

Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin (1-Amino-3-aminomethyl-3,5,5-trimethylcyclohexan), 4,4'-Diaminodicyclohexylmethan, 4,4'-Diaminodicyclohexan, m-Xylylendiamin, p-Xylylendiamin, oder isomere Oktandiamine. Bevorzugte Diamine sind Hydrazin, Alkyl- oder Cycloalkyldiamine wie Propylendiamin und Isophorondiamin.

Es können auch Polyamine eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin ist Ethylhexylamin zu nennen (vgl. auch die Patentschrift EP-A- 0 089 497).

Beispiele geeigneter Aminoalkohole sind Ethanolamin, Methylethanolamin, Diiso-propylamin, Diethanolamin, N-Methyldiethanolamin, Hydroxyethoxyethylamin, Polyetheraminole, Aminomethylpropanol, Trishydroxymethylammomethan oder Triethanolamin.

Von diesen sind die Polyole mit einer Funktionalität von 3 bis 4 und/oder die Aminoalkohole, die mindestens zwei Hydroxylgruppen aufweisen, insbesondere Diethanolamin, von besonderem Vorteil und werden deshalb erfindungsgemäß besonders bevorzugt verwendet.

Das resultierende hydroxylgruppenhaltige, kettenverlängerte Polyurethanpräpolymer (B2) wird in einem dritten Verfahrensschritt mit mindestens einen Polyisocyanat zu einem weiteren isocyanatgruppenhaltigen Polyurethanpräpolymer (B3) umgesetzt.

Beispiele geeigneter Polyisocyanate sind die vorstehend beschriebenen.

Erfindungsgemäß wird das isocyanatgruppenhaltige Polyurethanpräpolymer (B3) in einem vierten Verfahrensschritt mit einem Blockierungsmittel umgesetzt, sodaß ein Teil oder alle seiner Isocyanatgruppen verkappt oder blockiert werden und das Polyurethan (B4) mit blockierten Isocyanatgruppen, d.h. die erfindungsgemäß zu verwendende Bindemittelkomponente (B), resultiert.

Beispiele geeigneter Blockierungsmittel sind die aus der US-Patentschrift US-A-4,444,954 bekannten Blockierungsmittel:
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) imidazole wie Imidazol oder 2-Ethylimidazol;
x) Harnstoffe wie Harnstoff, Thioharnstoff, Ethylenharnstoff, Ethylenthiohamstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Düsobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Imidazole oder Triazole; sowie
xvü) Gemische dieser Blockierungsmittel, insbesondere Dimethylpyrazol und Triazole, Malonester und Acetessigsäureester oder Dimethylpyrazol und Succinimid.

Die Blockierungsmittel werden so ausgewählt, daß die blockierten Isocyanatgruppen erst genau in dem Temperaturbereich, in dem die thermische Vernetzung des erfindungsgemäßen Beschichtungsstoffs stattfinden soll, insbesondere in dem Temperaturbereich von 120 bis 160 °C, wieder deblockieren und Vernetzungsreaktionen eingehen.

Von den vorstehend im Detail beschriebenen Blockierungsmittel erfüllen insbesondere die Oxime xiii) die vorstehend genannte Bedingung, so daß sie erfindungsgemäß besonders bevorzugt verwendet werden. Von diesen bieten wiederum die Ketoxime, insbesondere Methylethylketoxim, ganz besondere Vorteile und werden deshalb ganz besonders bevorzugt verwendet.

Vorzugsweise werden die Blockierungsmittel in stöchiometrischen Mengen angewandt.

Sollten in dem resultierenden blockierten Polyurethan (B4) noch freie Isocyanatgruppen vorhanden sein, werden diese in einem optionalen fünften Verfahrensschritt mit mindestens einem der vorstehend in Detail beschriebenen Kettenverlängerungsmittel umgesetzt.

Methodisch weist die Herstellung der erfindungsgemäß zu verwendenden Bindemittelkomponente (B) keine Besonderheiten auf, sondern erfolgt nach den üblichen und bekannten Methoden der Herstellung von Polyurethanen vorzugsweise in einem gegenüber Isocyanaten nicht reaktiven, gegebenenfalls wassermischbaren organischen Lösemittel oder Lösemittelgemisch. Beispiele geeigneter Lösemittel sind Ketone wie Methylethylketon oder Methylisobutylketon oder cyclische Amide wie N-Methylpyrrolidon.

Die erimdungsgemäß zu verwendende Bindemittelkomponente (B) ist in dem erfindungsgemäßen Beschichtungsstoff vorteilhafterweise in einer Menge von 1 bis 50, bevorzugt 2 bis 30, ganz besonders bevorzugt 2,5 bis 20, und insbesondere 3 bis 10 Gew.-%, jeweils bezogen auf den Festkörpergehalt des erfindungsgemäßen Beschichtungsstoffs, enthalten.

Zu ihrer bestimmungsgemäßen Verwendung wird die erfindungsgemäß zu verwendende Bindemittelkomponente (B) in einem wäßrigen Medium dispergiert, wobei gegebenenfalls die organischen Lösemittel destillativ entfernt werden.

Das wäßrige Medium enthält im wesentlichen Wasser. Hierbei kann das wäßrige Medium bereits die nachstehend im Detail beschriebenen weiteren Komponenten des erfindungsgemäßen Beschichtungsstoffs (A), (C), (D) und/oder (E) und/oder in untergeordneten Mengen sonstige gelöste feste, flüssige oder gasförmige organische und/oder anorganische, nieder- und/oder hochmolekulare Stoffe enthalten. Im Rahmen der vorliegenden Erfindung ist unter dem Begriff "untergeordnete Menge" eine Menge zu verstehen, welche den wäßrigen Charakter des wäßrigen Mediums nicht aufhebt.

Bei dem wäßrigen Medium kann es sich aber auch um reines Wasser handeln.

Erfindungsgemäß ist es von Vorteil, reines Wasser zu verwenden. Weitere Vorteile resultieren, wenn der Feststoffgehalt der resultierenden Dispersion der erfindungsgemäß zu verwendenden Bindemittelkomponente (B) bei 10 bis 60, vorzugsweise 20 bis 55 und insbesondere 25 bis 50 Gew.-%, jeweils bezogen auf die Polyurethandispersion (B), liegt.

Der erfindungsgemäße Beschichtungsstoff enthält als weiteren wesentlichen Bestandteil die wasserdispergierbare, urethangruppenhaltige, hydroxyfunktionelle Bindemittelkomponente (A).

Eine im Rahmen der Erfindung einsetzbare Bindemittelkomponente (A) ist beispielsweise herstellbar, indem ein Polyol oder eine Mischung von Polyolen mit einem zahlenmittleren Molekulargewicht von 100 bis 5.000, vorzugsweise von 150 bis 2.000, mit einem Polyisocyanat oder einer Mischung aus Polyisocyanaten umgesetzt wird, wobei das Polyol und das Polyisocyanat hinsichtlich Struktur und Mengenverhältnisse mit der Maßgabe ausgewählt sind, daß die Bindemittelkomponente (A) bevorzugt eine OH-Zahl von 30 bis 160, vorzugsweise von 60 bis 110, aufweist.

Beispiele geeigneter Polyole und Polyisocyanate sind die vorstehend im Detail beschriebenen.

Bevorzugt ist es, wenn das zur Herstellung der Bindemittelkomponente (A) verwendete Polyol ein Polyesterpolyol ist, welches vorzugsweise ein zahlenmittleres Molekulargewicht von 250 bis 5.000, höchstvorzugsweise von 350 bis 2.000, aufweist. Vorteilhafterweise sind die Monomere zur Herstellung eines solchen Polyesterpolyols flexibilitätsvermittelnd. Flexibilitätsvermittelnde Monomeren können beispielsweise ausgewählt sein aus der Gruppe bestehend aus "Adipinsäure, Dimerfettsäuren und Hexandiol".

Vorteilhatte Bindemittelkomponenten (A) werden erhalten, wenn noch die vorstehend im Detail beschriebenen Verbindungen, durch welche stabilisierende (potentiell) ionische und/oder nichtionische funktionelle Gruppen eingeführt werden, Neutralisationsmittel und/oder Kettenverlängerungsmittel verwendet werden.

Methodisch weist die Herstellung der erfindungsgemäß zu verwendenden Bindemittelkomponente (A) keine Besonderheiten auf, sondern erfolgt nach den üblichen und bekannten Methoden der Herstellung von Polyurethanen vorzugsweise in einem gegenüber Isocyanaten nicht reaktiven, gegebenenfalls wassermischbaren organischen Lösemittel oder Lösemittelgemisch. Beispiele geeigneter Lösemittel sind Ketone wie Methylethylketon oder Methylisobutylketon oder cyclische Amide wie N-Methylpyrrolidon.

Die erfindungsgemäß zu verwendende Bindemittelkomponente (A) ist in dem erfindungsgemäßen Beschichtungsstoff vorteilhafterweise in einer Menge von 1 bis 70, bevorzugt 2 bis 50, ganz besonders bevorzugt 3 bis 40, und insbesondere 5 bis 30 Gew.-%, jeweils bezogen auf den Festkörpergehalt des erfindungsgemäßen Beschichtungsstoffs, enthalten.

Zu ihrer bestimmungsgemäßen Verwendung wird die erfindungsgemäß zu verwendende Bindemittelkomponente (A) in einem wäßrigen Medium dispergiert, wobei gegebenenfalls die organischen Lösemittel destillativ entfernt werden.

Das wäßrige Medium enthält im wesentlichen Wasser oder besteht hieraus. Hierbei kann das wäßrige Medium bereits die nachstehend im Detail beschriebenen weiteren Komponenten des erfindungsgemäßen Beschichtungsstoffs (C), (D) und/oder (E), die vorstehend beschriebene erfindungsgemäß zu verwendende Bindemittelkomponente (B) und/oder in untergeordneten Mengen sonstige gelöste feste, flüssige oder gasförmige organische und/oder anorganische, nieder- und/oder hochmolekulare Stoffe enthalten.

Erfindungsgemäß ist es von Vorteil, reines Wasser zu verwenden. Weitere Vorteile resultieren, wenn der Feststoffgehalt der resultierenden Dispersion der erfindungsgemäß zu verwendenden Bindemittelkomponente (A) bei 10 bis 60, vorzugsweise 20 bis 55 und insbesondere 25 bis 50 Gew.-%, jeweils bezogen auf die Polyurethandispersion (A), liegt.

Als Komponente (C) kann jedes wasserverdünnbare Aminoplastharz eingesetzt werden. Hierbei kommt jedes für Füller, Decklacke oder transparente Klarlacke geeignete Aminoplastharz oder eine Mischung aus solchen Aminoplastharzen, insbesondere Melaminformaldehydharze, welche bei Temperaturen von 100°C bis 180°C, vorzugsweise 120 bis 160°C, gegenüber OH-Gruppen reaktiv sind, in Betracht. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Es sind auch die üblichen und bekannten wasserverdünnbaren Aminoplastharze geeignet, deren Methylol- und/oder Alkoxymethylgruppen z. T. mittels Carbamat- oder Allophanatgruppen defunktionalisiert sind. Aminoplastharze dieser Art werden z. B. in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Das erfindungsgemäß zu verwendende wasserverdünnbare Aminoplastharz (C) ist in dem erfindungsgemäßen Beschichtungsstoff vorteilhafterweise in einer Menge von 1 bis 50, bevorzugt 2 bis 40, besonders bevorzugt 3 bis 30 und insbesondere 4 bis 20 Gew.-%, jeweils bezogen auf den Feststoffgehalt des erfindungsgemäßen Beschichtungsstoffs, enthalten.

Die optional einsetzbare Bindemittelkomponente (D) hat vorteilhafterweise die folgenden Eigenschaften: zahlenmittleres Molekulargewicht von bis zu 5.000, vorzugsweise von 500 bis 3.000, und OH-Zahl zwischen 50 und 300, bevorzugt zwischen 100 und 250. Vorteilhafterweise wird eine Komponente (D) eingesetzt, welche zumindest zum Teil aus einem epoxidharzmodifizierten, wasserverdünnbaren Polyester besteht, der herstellbar ist, indem
(D1) aus
   (D1.1) mindestens einer mindestens drei Carboxylgruppen enthaltenden Polycarbonsäure bzw. einem reaktiven Derivat dieser Säure und/oder
   (D1.2) mindestens einem mindestens eine Carboxylgruppe aufweisenden Polyol und
   (D1.3) mindestens einer zwei Carboxylgruppen enthaltenden Polycarbonsäure bzw. einem reaktiven Derivat dieser Säure und
   (D1.4) mindestens einem Polyol,
      - wobei mindestens 10 Mol%, bevorzugt 30-70 Mol%, der eingesetzten Komponenten (D1.1), (D1.2), (D1.3) und (D1.4) (bezogen auf (D1.1) + (D1.2) + (D1.3) + (D1.4) = 100 Mol%) mindestens ein mindestens sechs C-Atome aufweisendes (cyclo-) aliphatisches Strukturelement enthalten -
      ein Polyester synthetisiert wird, der ein zahlenmittleres Molekulargewicht von unter 2.000, bevorzugt 500 bis 1.500, eine Säurezahl von 35 bis 240, bevorzugt 50 bis 120, eine OH-Zahl von 56 bis 320, vorzugsweise 80 bis 200, aufweist und in dem alle (D1.1)- und (D1.3)-Komponenten über mindestens zwei Carboxylgruppen einkondensiert sind und
(D2) dieser so gewonnene Polyester anschließend mit 0,3 bis 1,5, vorzugsweise 0,5 bis 1,0 Äquivalenten pro Polyestermolekül
   (D2.1) eines ein Epoxidäquivalentgewicht von 170 bis 1.000, bevorzugt 170 bis 500, aufweisenden Epoxidharzes auf Basis eines Bisphenols, vorzugsweise Bisphenol A, und/oder
   (D2.2) einem mindestens eine Epoxidgruppe pro Molekül enthaltenden Derivat dieses Epoxidharzes
   unter Reaktionsbedingungen, bei denen im wesentlichen nur Carboxylgruppen mit Epoxidgruppen reagieren, zu einem epoxidharzmodifizierten Polyester umgesetzt wird, der nach
(D3) Neutralisation von mindestens einem Teil der freien Carboxylgruppen in wasserverdünnbarer Form vorliegt.

Ein solcher Polyester ist aus der Literaturstelle EP 0 269 828 B1 bekannt, auf welche ergänzend verwiesen wird.

Die Carboxylgruppen des Polyesters werden von den Komponenten (D1.1) und/oder (D1.2) geliefert. Der Polyester kann unter alleiniger Verwendung der Carboxylgruppenlieferanten (D1.1) bzw. (D1.2) oder unter Verwendung eines Gemisches aus den Komponenten (D1.1) und (D1.2) aufgebaut werden.

Als Komponente (D1.1) kann unter Berücksichtigung der obengenannten Forderungen im Prinzip jede zur Herstellung von Polyestern geeignete, mindestens drei Carboxylgruppen enthaltende Polycarbonsäure bzw. ein reaktives Derivat (z.B. Anhydrid, Ester oder Halogenid) oder ein Gemisch solcher Säuren bzw. Säurederivate eingesetzt werden. Als Beispiele seien Trimellithsäure, Trimesinsäure (1,3,5-Benzoltricarbonsäure), Pyromellithsäure und trimere Fettsäuren genannt. Bevorzugt wird Trimellithsäure eingesetzt

Als Komponente (D1.2) kann unter Berücksichtigung der obengenannten Forderungen im Prinzip jedes zur Herstellung von Polyestern geeignete carboxylgruppenhaltige Polyol bzw. ein Gemisch solcher Polyole eingesetzt werden, wobei unter einem Polyol eine organische Verbindung verstanden wird, die mindestens zwei Hydroxylgruppen trägt. Vorteilhafterweise wird Dimethylolpropionsäure als (D1.2)-Komponente eingesetzt.

Als Komponente (D1.3) kann unter Berücksichtigung der obengenannten Forderungen im Prinzip jede zur Herstellung von Polyestern geeignete zwei Carboxylgruppen enthaltende Polycarbonsäure bzw. ein reaktives Derivat (z.B. Anhydrid, Ester oder Halogenid) oder ein Gemisch solcher Säuren bzw. Säurederivate eingesetzt werden. Als Beispiele für geeignete Säuren seien genannt: Phthalsäure, Isophthalsäure, Terephthalsäure, Fumarsäure, Maleinsäure, Endomethylentetrahydrophthalsäure, Bernsteinsäure, Adipinsäure, Korksäure, Acelainsäure, Sebacinsäure und dimere Fettsäuren. Bevorzugt werden Phthalsäure, Isophthalsäure, Adipinsäure und dimere Fettsäuren eingesetzt.

Als Komponente (D1.4) kann unter Berücksichtigung der obengenannten Forderungen im Prinzip jedes zur Herstellung von Polyestern geeignete Polyol bzw. ein Gemisch von Polyolen eingesetzt werden, wobei unter Polyol eine organische Verbindung verstanden wird, die mindestens 2 Hydroxylgruppen trägt. Geeignete Polyole sind z.B. Ethylenglykol, Propandiole, Butandiole, Pentandiole. Neopentylglykol, Hexandiole, Diethylenglykol, Glycerin, Trimethylolethan, Trimethylolpropan, Pentaerythrit, Dipentaerythrit, Hydroxypivalinsäureneopentylglykolester, 2-Methyl-2-propyl-propandiol-1,3, 2,2,4-Trimethylpentandio1-1,3 und 2,2,5-Trimethylhexandiol-1,6. Bevorzugt werden Neopentylglykol, Hexandiol-1,6 und Hydroxypivalinsäureneopentylglykolester eingesetzt.

Bei den Epoxidharzen (D2.1) auf Basis eines Bisphenols, vorzugsweise Bisphenol A, handelt es sich in der Regel um Umsetzungsprodukte von Bisphenolen mit Epichlorhydrin. Diese Epoxidharze sollen ein Epoxidäquivalentgewicht von 170 bis 1.000, bevorzugt 170 bis 500, aufweisen und vorzugsweise im Durchschnitt eine bis zwei, besonders bevorzugt zwei Epoxidgruppen pro Molekül enthalten.

Es können auch mindestens eine Epoxidgruppe pro Molekül enthaltende Derivate (D2.2) dieser Epoxidharze eingesetzt werden. Als geeignete Derivate können mindestens eine Epoxidgruppe pro Molekül aufweisende Umsetzungsprodukte aus den obengenannten Epoxidharzen und einer (cyclo-)aliphatischen Mono- oder Polycarbonsäure, vorzugsweise einer Mono- oder Polycarbonsäure mit einem mindestens 6 C-Atome aufweisenden (cyclo-) aliphatischen Strukturelement, verwendet werden. Die Derivate können hergestellt werden, indem die in Rede stehenden Epoxidharze beispielsweise mit polymeren, vorzugsweise dimeren Fettsäuren, Adipinsäure, Azelainsäure, Dodekandicarbonsäure, langkettigen Monocarbonsäuren, Tetrahydrophthalsäure oder Hexahydrophthalsäure so umgesetzt werden, daß Umsetzungsprodukte entstehen, die noch mindestens eine Epoxidgruppe pro Molekül enthalten.

Ganz besonders bevorzugte wasserverdünnbare Polyester werden erhalten, wenn der in Stufe (D1) synthetisierte Polyester mit 0,3 bis 1,5, vorzugsweise 0,5 bis 1,0 Äquivalenten pro Polyestermolekül eines mindestens eine Epoxidgruppe pro Molekül aufweisenden Umsetzungsproduktes (D2.2) aus einem Epoxidharz auf Basis eines Bisphenols, vorzugsweise Bisphenol A, mit einem Epoxidäquivalentgewicht von 170 bis 1.000, bevorzugt 170 bis 500, und einer (cyclo-)aliphatischen Mono- oder Polycarbonsäure mit einem mindestens 18 C-Atome aufweisenden (cyclo-)aliphatischen Strukturelement, vorzugsweise einer polymeren, insbesondere einer dimeren Fettsäure, umgesetzt worden ist.

Die Umsetzung zwischen dem in der Stufe (D1) synthetisierten Polyester mit dem Epoxidharz bzw. Epoxidharzderivat (D2.1) und/oder (D2.2) muß so geführt werden, daß im wesentlichen nur die Carboxylgruppen des Polyesters (D1) mit den Epoxidgruppen des Epoxidharzes (D2) umgesetzt werden und daß Konkurrenzreaktionen, wie z.B. die Umsetzung von Hydroxylgruppen mit Epoxidgruppen nur in untergeordnetem Maße ablaufen.

Geeignete Reaktionsbedingungen sind z.B.: Reaktionstemperatur 25-180°C, vorzugsweise 80-160°C. Die Umsetzung kann in einem inerten Lösemittel oder in Substanz durchgeführt werden und wird vorteilhafterweise durch basische Katalysatoren, wie z.B. tertiäre Amine, katalysiert.

Nach Neutralisation (D3) von mindestens einem Teil der in dem epoxidharzmodifizierten Polyester (D) enthaltenen Carboxylgruppen mit basischen Verbindungen, wie z.B. Ammoniak, aliphatischen sekundären und tertiären Aminen, wie Diisopropanolamin, Dimethyl- und Diethylaminoethanol sowie Trimethyl-, Triethyl- und Tripropylamin, vorzugsweise tertiären Aminen, liegt der epoxidharzmodifizierte Polyester (D) in wasserverdünnbarer Form vor.

Die Dispersion des Polyesters (D) in einem wäßrigen Medium erfolgt wie vorstehend bei den Bindemittelkomponente (A) und (B) beschrieben. Vorteilhafterweise werden hierbei die gleichen oder in etwa die gleichen Feststoffgehalte eingestellt.

In dem erfindungsgemäßen Beschichtungsstoff kann der Polyester (D) in einer Menge von 1 bis 50, vorzugsweise 2 bis 40, besonders bevorzugt 3 bis 30 und insbesondere 5 bis 20 Gew.-%, jeweils bezogen auf den Feststoffgehalt des erfindungsgemäßen Beschichtungsstoffs, enthalten sein.

Der erfindungsgemäße Beschichtungsstoff kann außerdem lackübliche Additive (E) in wirksamen Mengen enthalten. Art und Menge der Additive (E) richten sich vor allem nach dem Verwendungszweck des erfindungsgemäßen Beschichtungsstoffs. Vorteilhafterweise sind diese Additive (E) unter den Verarbeitungs- und Applikationsbedingungen des erfindungsgemäßen Beschichtungsstoffs nicht flüchtig.

Wird der erfindungsgemäße Beschichtungsstoff als Decklack oder Wasserbasislack verwendet, enthält er farb- und/oder effektgebende Pigmente (E) in üblichen und bekannten Mengen. Die Pigmente (E) können aus anorganischen oder organischen Verbindungen bestehen und können effekt- und/oder farbgebend sein. Der erfindungsgemäße Beschichtungsstoff gewährleistet daher aufgrund dieser Vielzahl geeigneter Pigmente (E) eine universelle Einsatzbreite der Beschichtungsstoffe und ermöglicht die Realisierung einer Vielzahl von Farbtönen und optischer Effekte.

Als Effektpigmente (E) können Metallplättchenpigmente wie handelsübliche Aluminiumbronzen, gemäß DE-A-36 36 183 chromatierte Aluminiumbronzen, und handelsübliche Edelstahlbronzen sowie nichtmetallische Effektpigmente, wie zum Beispiel Perlglanz- bzw. Interferenzpigmente, eingesetzt werden. Beispiele für geeignete anorganische farbgebende Pigmente (E) sind Titandioxid, Eisenoxide, Sicotransgelb und Ruß. Beispiele für geeignete organische farbgebende Pigmente sind Indanthrenblau, Cromophthalrot, Irgazinorange und Heliogengrün.

Desweiteren kann der erfindungsgemäße Beschichtungsstoff organische und anorganische Füllstoffe (E) in üblichen und bekannten, wirksamen Mengen enthalten. Beispiele für geeignete Füllstoffe sind Titandioxid, Ruß, Graphit, Kreide, Calciumsulfate, Bariumsulfat, Silikate wie Talk oder Kaolin, Kieselsäuren wie Aerosil®, Oxide wie Aluminiumhydroxid, Eisenoxide oder Magnesiumhydroxid oder organische Füllstoffe wie Textilfasern, Cellulosefasern, Polyethylenfasern oder Holzmehl. Ergänzend wird auf Römpp Lexikon Lacke und Druckfarben, Georg Thieme Verlag, 1998, Seiten 250 ff., »Füllstoffe«, verwiesen.

Die erfindungsgemäßen Beschichtungsstoffe, die zur Herstellung von Füllern oder Steinschlagschutzgründen verwendet werden, enthalten diese Pigmente und/oder Füllstoffe (E) vorteilhafterweise in einer Menge von 10 bis 80, bevorzugt 15 bis 70, besonders bevorzugt 20 bis 65 und insbesondere 25 bis 60 Gew.-%, jeweils bezogen auf den Gesamtfeststoffgehalt des erfindungsgemäßen Beschichtungsstoffs.

Die vorstehend genannten Additive (E) entfallen, wenn die erfindungsgemäßen Beschichtungsstoffe als Klarlacke verwendet werden.

Beispiele geeigneter Additive (E), welche sowohl in den erfindungsgemäßen Klarlacken als auch in den Decklacken, Wasserbasislacken und Füllern bzw. Steinschlagschutzgründen vorhanden sein können, sind
- UV-Absorber;
- Radikalfänger;
- Katalysatoren für die Vernetzung;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polurethane;
- Haftvermittler;
- Verlaufmittel;
- filmbildende Hilfsmittel wie Cellulose-Derivate;
- Flammschutzmittel;
- niedermolekulare, oligomere und hochmolekulare Reaktivverdünner, die an der thermischen Vernetzung teilnehmen können, insbesondere Polyole wie Tricyclodecandimethanol, dendrimere Polyole, hyperverzweigte Polyester, Polyole auf der Basis von Metatheseoligomeren oder verzweigten Alkanen mit mehr als acht Kohlenstoffatomen im Molekül;
- hochsiedende organische Lösemittel ("lange Lösemittel");
- rheologiesteuernde Additive, wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate; oder
- Vernetzungsmittel wie Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispeilsweise Umsetzungsprodukte von Malonsäurediestern und Polyisocyanaten oder von Estern und Teilestern mehrwertiger Alkohole der Malonsäure mit Monoisocyanaten, wie sie in der europäischen Patentschrift EP-A-0 596 460 beschrieben werden.

Weitere Beispiele geeigneter Lackadditive werden in dem Lehrbuch "Lackadditive" von Johan Bieleman, Wiley-VCH, Weinheim, New York, 1998, beschrieben.

Sofern sie verwendet werden, sind diese Additive (E) , welche sowohl in den erfindungsgemäßen Klarlacken als auch in den Decklacken, Wasserbasislacken und Füllern bzw. Steinschlagschutzgründen vorhanden sein können, in dem erfindungsgemäßen Beschichtungsstoff vorteilhafterweise in einer Menge bis zu 40, vorzugsweise bis zu 30, besonders bevorzugt bis zu 20 und insbesondere bis zu 10 Gew.-%, jeweils bezogen auf den Feststoffgehalt des erfindungsgemäßen Beschichtungsstoffs, enthalten.

Die Erfindung lehrt weiterhin ein Verfahren zur Herstellung eines vorstehend beschriebenen erfindungsgemäßen Beschichtungsstoffs, wobei die Komponenten (A), (B) und (C) sowie ggf. (D) separat hergestellt werden, und wobei die Komponenten (A), (B) und (C) sowie ggf. (D) zu dem applikationsbereiten Beschichtungsstoff vermischt und homogenisiert werden. Im einzelnen kann die Komponente (A) vor dem Vermischen mit den Komponenten (B) und (C) sowie ggf. (D) als Pigmentpaste hergerichtet werden. Die Komponenten (A) und (B) sowie ggf. (C) werden meist vor dem Vermischen als wäßrige Dispersionen zubereitet, wobei die Dispersion mit der Komponente (A) vorzugsweise frei von Lösemitteln ist.

Die Komponente (E) kann entweder vor dem Vermischen der Komponenten (A), (B) und (C) sowie ggf. (D) einer dieser Komponenten zugemischt werden, wodurch eine Pigmentpaste resultiert, oder im Zuge des Vermischens der Komponenten (A), (B) und (C) sowie ggf. (D) dem Beschichtungsstoff vorzugsweise in der Form einer Pigmentpaste zugemischt werden.

Der erfindungsgemäßen Beschichtungsstoff eignet sich für die Herstellung einoder mehrschichtiger Beschichtungen, welche mechanische Energie absorbieren und/oder farb- und/oder effektgebend sind, auf grundierten oder ungrundierten Substraten. Außerdem eignet er sich für die Herstellung ein- oder mehrschichtiger Klarlackierungen auf grundierten oder ungrundierten Substraten oder auf den einoder mehrschichtigen Beschichtungen, welche mechanische Energie absorbieren und/oder farb- und/oder effektgebend sind.

Als Substrate kommen alle zu lackierenden Oberflächen von Gegenständen in Betracht, die einer Härtung der hierauf befindlichen Lackschichten unter Anwendung von Hitze zugänglich sind, das sind z. B. Gegenstände aus Metallen, Kunststoffen, Holz, Keramik, Stein, Textil, Faserverbunden, Leder, Glas, Glasfasern, Glas- und Steinwolle oder mineral- und harzgebundene Baustoffen, wie Gips- und Zementplatten oder Dachziegel. Demnach ist der Beschichtungsstoff für Anwendungen in der Automobillackierung der Lackierung von Möbeln und der industriellen Lackierung, inklusive Coil Coating und Container Coating, in hohem Maße geeignet. Im Rahmen der industriellen Lackierungen eignet er sich für die Lackierung praktisch aller Teile für den privaten oder industriellen Gebrauch wie Radiatoren, Haushaltsgeräte, Kleinteile aus Metall, Radkappen oder Felgen.

Insbesondere eignet sich der erfindungsgemäße Beschichtungsstoff für die Herstellung von Lackierungen, welche mechanische Energie absorbieren, ohne hierbei zerstört zu werden.

Die Erfindung lehrt demnach insbesondere die Verwendung des erfindungsgemäßen Beschichtungsstoffs zur Herstellung einer Füllerschicht und/oder eines Steinschlagschutzschutzgrundes auf einem grundierten oder ungrundierten Substrat sowie zur Herstellung eines beschichteten metallischen Substrats, vorzugsweise einer beschichteten Kraftfahrzeugkarosserie oder eines beschichteten Kraftfahrzeugkarosseriebauteils. In einem Verfahren zur Herstellung eines beschichteten Substrats ist es bevorzugt, wenn auf das Substrat zunächst eine Grundierung, vorzugsweise eine Elektrotauchlackgrundierung, aufgetragen und eingebrannt wird, wobei hierauf der erfindungsgemäße Beschichtungsstoff aufgetragen und eingebrannt wird, wobei dann ein vorzugsweise wäßriger Basislack aufgetragen und ggf. nach Zwischenlüftung optional mit einem Klarlack, vorzugsweise einem Zweikomponentenklarlack, überschichtet wird und wobei im Falle der Überschichtung mit einem Klarlack dieser zusammen mit dem Basislack "naß in naß" eingebrannt wird.

Hierbei wird der erfindungsgemäße Beschichtungsstoff in einer Naßschichtdicke aufgetragen, daß nach der Aushärtung in der fertigen erfindungsgemäßen Füllerschicht oder dem erfindungsgemäßen Steinschlagschutzgrund eine Trockenschichtdicke von 5 bis 100, vorzugsweise 10 bis 75, besonders bevorzugt 15 bis 55 und insbesondere 15 bis 40 µm resultiert.

Die Applikation des erfindungsgemäßen Beschichtungsstoffs kann durch alle üblichen Applikationsmethoden, wie z.B. Spritzen, Rakeln, Streichen, Gießen, Tauchen oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikationen kann bei Temperaturen von max. 70 bis 80 °Celsius durchgeführt werden, so daß geeignete Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsstoff selbst, betrieben wird.

Auch die thermische Härtung weist keine methodischen Besonderheiten auf, sondern erfolgt nach den üblichen und bekannten Methoden wie Erhitzen in einem Umluftofen oder Bestrahlen mit IR-Lampen. Vorteilhafterweise erfolgt die thermische Härtung bei einer Temperatur von 100 bis 180 °C und besonders bevorzugt 120 bis 160 °C während einer Zeit von 1 min bis zu 2 h, besonders bevorzugt 2 min bis zu 1 h und insbesondere 3 min bis 30 min. Werden Substrate verwendet, welche thermisch stark belastbar sind, kann die thermische Vernetzung auch bei Temperaturen oberhalb 180 °C durchgeführt werden. Im allgemeinen empfiehlt es sich aber, Temperaturen von 180 °C, vorzugsweise 160 °C, nicht zu überschreiten.

Die erfindungsgemäßen Füllerschichten oder Steinschlagschutzgründe weisen ein hervorragendes, ausgewogenes Eigenschaftsprofil auf, bei dem auch einander entgegenstehenden Eigenschaften wie z.B. sehr guter Multischlag und Monoschlag, niedrige Schichtdicke und sehr gute(r) Füllkraft/Decklackstand, niedrige Einbrenntemperatur und sehr guter Decklackstand sowie niedrige Einbrenntemperatur und hohe Haftung zugleich verwirklicht sind.

### Beispiele und Vergleichsversuch

### Beispiel 1: Herstellung einer Komponente A

### Beispiel 1.1: Herstellung eines Polyester-Polyols A1

492 g Adipinsäure, 559 g Isophthalsäure und 1192 g Hexandiol wurden in einen Reaktor, der mit Rührer, Kolonne und Ölheizung ausgerüstet war, eingewogen und langsam auf 220°C aufgeheizt. Das abgespaltene Reaktionswasser wurde über eine Kolonne aus dem Reaktionsgemisch abdestilliert. Die Reaktion wurde so lange fortgeführt, bis eine Säurezahl des Festharzes von < 5 erreicht ist. Der fertige Polyester hat eine Viskosität von 1,9 dPas gemessen in einer 70%igen Anlösung in Butylglykol.

### Beispiel 1.2: Herstellung einer Polyurethandispersion A2

444 g 4,4-Dicyclohexylmethandiisocyanat (Desmodur W von Bayer), 57 g Dimethylolpropionsäure, 44 g Neopentylglykol und 185 g N-Methylpyrrolidon wurden in einen Reaktor mit Rührer, Rückflußkühler und Ölheizung eingewogen und auf 100°C aufgeheizt. Es wurde stündlich der Gehalt an NCO-Gruppen bestimmt. Bei einem NCO-Gehalt von 9,74% der Lösung wurde auf 85°C abgekühlt und 1037 g des unter Beispiel 1.1 beschriebenen Polyesters zugegeben. Es wurde wieder auf 100°C aufgeheizt und die Reaktion mit der Messung des NCO-Gehaltes weiterverfolgt. Wenn der NCO-Gehalt der Lösung kleiner als 0,2% wurde, wurde auf 85°C abgekühlt und es wurden 37 g Dimethylethanolamin zur Neutralisation der Carboxylgruppen zugegeben. Sodann wurden 1900 g Wasser zugegeben. Die resultierende Polyurethandispersion hatte einen Festkörper von 40% (gemessen in einem Umluftofen für 60 min. bei 130°C), eine Säurezahl von 19,2 und einen pH-Wert von 8,3 (gemessen in einer Verdünnung 2:1 in Wasser).

### Beispiel 2: Herstellung einer Komponente B

631,2 g eines Polyesterdiols aus Isophthalsäure, Dimerfettsäure und Hexandiol (zahlenmittleres Molekulargewicht Mn ca. 1.400) und 60,4 g Dimethylolpropionsäure wurden mit 354,4 g 4,4-Dicyclohexylmethandiisocyanat (Desmodur W von Bayer) in 448, 2 g Ethylmethylketon bei 80°C umgesetzt, bis der NCO-Gehalt einen konstanten Wert aufwies. Anschließend wurden 33,1 g Diethanolamin zugesetzt, und das Reaktionsgemisch wurde während 2 Stunden unter Rühren bei 80°C gehalten. Nach Absenkung der Temperatur auf 60°C wurden 108,9 g trimerisiertes Hexamethylendiisocyanat (Basonat® HI 100 von BASF) und 54,4 g Methylethylketoxim zugegeben und weitere 30 min. bei 60°C gerührt. Dann wurden weitere 33,1 g Methylethylketoxim zugegeben. Man hält das Reaktionsgemisch noch eine weitere Stunde bei 60°C und setzt dann zur Kettenverlängerung 20,0 g Diethanolamin und 20 g Methylethylketon zu. Nach dem Abklingen der exothermen Reaktion hielt man die Temperatur bei 80°C, bis ein NCO-Gehalt von < 0,1% erreicht war. Das Produkt wies dann eine Platte-Kegel-Viskosität von 3,0 - 6,0 dPas auf, gemessen in einer Verdünnung mit N-Methylpyrrolidon im Verhältnis 1:1 bei 23°C und 1.000 s⁻¹. Es wurden nun 121 g Butylglykol zugeben. 70% der vorhandenen Carboxylgruppen wurden sodann mit Diethanolamin bei 80°C neutralisiert, und es wurde unter starken Rühren 1.972 g destilliertes Wasser innerhalb einer Stunde zugegeben und die Komponente (B) hierin dispergiert. Hiernach wurde das Methylethylketon im Vakuum abdestilliert, und die Dispersion wurde auf einen Festkörpergehalt von 37% eingestellt.

### Beispiel 3: Herstellung einer Komponente D

442,4 g Hexandiol und 166,6 g einer technischen dimeren Fettsäure (Dimerengehalt mindestens 80 %, Trimerengehalt höchstens 20 %) wurden in einen Reaktor, der mit Rührer, Kolonne und Ölheizung ausgerüstet war, eingewogen und langsam auf 130°C° aufgeheizt. Dann wurden 184,3 g Isophthalsäure zugegeben und weiter auf 220°C aufgeheizt. Das abgespaltene Reaktionswasser wurde über eine Kolonne aus dem Reaktionsgemisch abdestilliert. Die Reaktion wurde so lange fortgeführt, bis eine Säurezahl von 10,5 erreicht ist. Nach Abkühlen auf 140°C wurden portionsweise 266,7 g Trimellithsäureanhydrid unter Rühren zugegeben. Danach wurde auf 150°C aufgeheizt und solange verestert, bis eine Säurezahl von 67,7 ereicht war. Dann wurde auf 120°C abgekühlt und mit Butylglykol so verdünnt, daß eine Lösung mit einem Feststoffgehalt von 85% resultierte. Die 85%ige Polyesterlösung wurde auf 140°C erwärmt und mit 209,6 g eines Epoxidharzes aus Bisphenol A und Epichlorhydrin mit einem Epoxiequivalentgewicht von 490 portionsweise versetzt. Dann wurde bei 140°C solange umgesetzt, bis eine Säurezahl von 42,1 und ein Epoxiequivalent von mehr als 50.000 erreicht waren. Danach wurde auf unter 100°C abgekühlt und mit 64,6 g NN-Dimethylethanolamin neutralisiert. Das Reaktionsgut wurde sodann unter starkem Rühren in 2.000 g deionisiertes Wasser abgelassen, das zuvor auf 60°C erwärmt worden war. Die Dispersion wurde schließlich auf einen Feststoffgehalt von 35% und einen pH-Wert von 7,5 eingestellt.

### Beispiel 4: Herstellung der Pigmentanreibung eines erfindungsgemäßen Füllers

400 g der unter Beispiel 1 beschriebenen Polyurethandispersion, 7,4 g Aerosil® R972 (Degussa), 33 g Bayferrox 3910® (Bayer), 100 g Talkum 10MO (TDL), 204 g Ti-pure® R900 (Du Pont), 26,2 g Sicomixschwarz® 6190 (BASF), 60 g Blancfix® N (Sachtleben) und 140 g deionisiertes Wasser wurden 30 min. vordissolvert und auf einer handelsüblichen Perlmühle bis zu einer Feinheit von 12-15µm in Kreisfahrweise vermahlen. Die Temperatur bei der Vermahlung betrug mindestens 30°C, höchstens 60°C. Es wurden mindestens 7 theoretische Kreise gefahren.

### Beispiel 5: Herstellung eines erfindungsgemäßen wässrigen Füllers

Zu 970,6 g der Pigmentanreibung aus Beispiel 4 wurden 7,6 g Additol® XW 395 (Vianova Resins), 408 g des unter Beispiel 3. beschriebenen wässrigen Polyesters, 188 g der unter Beispiel 2 beschriebenen wässrigen Polyurethandispersion, 136 g eines wasserverdünnbaren methanolveretherten Melaminharzes, 100 g der unter Beispiel 1 beschriebenen wässrigen Polyurethandispersion, 0,6 g Dimethylethanolamin, 20 g Butylglykol, 20 g Butyldiglykol, 44 g Byketol® WS (Byk Chemie) und 45,8 g deionisiertes Wasser unter Rühren zugegeben. Nach der letzten Position wurde 1 Stunde homogenisiert. Es wurde mit Dimethylethanolamin ein pH-Wert von 7,5 und mit deionisiertem Wasser eine Viskosität von 60-100s DIN 4 (Ford Cup) eingestellt. Zur Applikation wurde mit deionisiertem Wasser eine Verarbeitungsviskosität von 30s DIN 4 eingestellt.

### Beispiel 6: Herstellung einer Pigmentanreibung eines wässrigen Füllers (Vergleichsbeispiel)

400 g des unter Beispiel 3 beschriebenen wässrigen Polyesters, 7,4 g Aerosil® R972 (Degussa), 33 g Bayferrox® 3910 (Bayer), 100 g Talkum 10MO (TDL), 204 g Ti-pure® R900 (Du Pont), 26,2 g Sicomixschwarz® 6190 (BASF), 60 g Blancfix® N (Sachtleben) und 140 g deionisiertes Wasser wurden 30 min. vordissolvert und auf einer handelsüblichen Perlmühle bis zu einer Feinheit von 12-15µm in Kreisfährweise vermahlen. Die Temperatur bei der Vermahlung betrug mindestens 30°C, höchstens 60°C. Es wurden mindestens 7 theoretische Kreise gefahren.

### Beispiel 7: Herstellung eines wässrigen Füllers (Vergleichsversuch)

Zu 970,6 g der Pigmentanreibung aus Beispiel 6 wurden 7,6 g Additol® XW 395 (Vianova Resins), 508 g des unter Beispiel 3 beschriebenen wässrigen Polyesters, 188 g der unter Beispiel 2 beschriebenen wässrigen Polyurethandispersion, 136 g eines wasserverdünnbaren methanolveretherten Melaminharzes, 0,6 g Dimethylethanolamin, 20 g Butylglykol, 20 g Butyldiglykol, 44 g Byketol® WS (Byk Chemie) und 45,8 g deionisiertes Wasser unter Rühren zugegeben. Nach der letzten Position wurde während 1 Stunde homogenisiert. Es wurde mit Dimethylethanolamin ein pH-Wert von 7,5 und mit deionisiertem Wasser eine Viskosität von 60-100s DIN 4 (Ford Cup) eingestellt. Zur Applikation wurde mit deionisiertem Wasser eine Verarbeitungsviskosität von 30s DIN 4 eingestellt.

### Beispiel 9: Prüfungsergebnisse

Die so hergestellten Beschichtungsstoffe wurden Prüfungen hinsichtlich der Eigenschaften von damit hergestellten Fülllerschichten unterworfen. Die Prüfung der Eigenschaften der Füllerschichten erfolgte in einem dem Fachmann geläufigen Mehrschichtaufbau, herstellbar aus einer handelsüblichen Elektrotauchlackierung, dem erfindungsgemäßen wässrigen Füller aus Beispiel 5 bzw. dem Vergeichsfüller aus Beispiel 7, einem handelsüblichen Wasserbasislack und einem handelsüblichen 2K-Klarlack, wobei der Wasserbasislack und der 2K-Klarlack in dem sogenannten naß in naß-Verfahren ohne Zwischeneinbrennung lackiert wurden.

Die Ergebnisse der Prüfungen finden sich in der Tabelle.

### Tabelle: Prüfungsergebnisse

### Beispiel 9.1: Lackierung des Füllers in einer Schichtdicke von 20µm, Einbrenntemperatur 155°C

| **Eigenschaften** | **Beispiel 5** | **Beispiel 7** |
|---|---|---|
| Kugelschuß (Abschlag in mm)^{a)} | 6 | 8 |
| Multischlag VDA (Note)^{b)} | 2 | 2 |
| Decklackstand (Note)^{c)} | 2 | 3 |
| Haftung GT2 (Note)^{d)} | 0 | 2 |

### Beispiel 9.2: Lackierung des Füllers in einer Schichtdicke von 35µm, Einbrenntemperatur 155°C

| Eigenschaften | **Beispiel 5** | **Beispiel 7** |
|---|---|---|
| Kugelschuß (Abschlag in mm)^{a)} | 8 | 13 |
| Multischlag VDA (Note)^{b)} | 2 | 2 |
| Decklackstand (Note)^{c)} | 2 | 3 |
| Haftung GT2 (Note)^{d)} | 0 | 2 |
| Note: 0 = gut, 5 = schlecht | | |

| | | |
|---|---|---|
| a) Lackprüfvorschrift LPV 2007.40.70.01 von Daimler Chrysler | | |
| b) Lackprüfvorschrift LPV 2007.40.70.05 von Daimler Chrysler | | |
| c) visuelle Beurteilung | | |
| d) Gitterschnittprüfung nach die ISO 2409: 1994-10 | | |

Der Vergleich der jeweiligen Prüfungsergebnisse zeigt, daß nur der erfindungsgemäße Beschichtungsstoffgemäß Beispiel 5 bei Einbrenntemperaturen unter 160°C einen Füller liefert, der sowohl den Monoschlag- als auch den Multischlagtest hervorragend besteht und auch bei vergleichsweise niedriger Schichtdicke einen sehr guten Decklackstand und eine sehr gute Haftung aufweist.

## Patentansprüche

1. Wäßriger Beschichtungsstoff, enthaltend
(A) eine in Wasser dispergierbare urethangruppenhaltige hydroxyfunktionelle Bindemittelkomponente,
(B) eine in Wasser dispergierbare urethangruppenhaltige Bindemittelkomponente mit blockierten Isocyanatgruppen,
(C) ein in Wasser dispergierbares Aminoplastharz,
(D) optional ein in Wasser dispergierbarer hydroxyfunktioneller Polyester und
(E) optional lackübliche Additive
**dadurch gekennzeichnet,**
**daß** die Bindemittelkomponente (B) herstellbar ist, indem
(B1) aus einem Polyol oder einer Mischung aus Polyolen sowie aus einem Polyisocyanat oder einer Mischung aus Polyisocyanaten ein isocyanatgruppenhaltiges Polyurethanpräpolymer hergestellt wird,
(B2) das isocyanatgruppenhaltige Polyurethanpräpolymer (B1) mit Hilfe eines Kettenverlängerungsmittels zu einem hydroxylgruppenhaltigen kettenverlängerten Polyurethanpräpolymer umgesetzt wird,
(B3) das hydroxylgruppenhaltige kettenverlängerte Polyurethanpräpolymer (B2) mit einem Polyisocyanat oder einer Mischung aus Polyisocyanaten zu einem weiteren isocyanatgruppenhaltigen Polyurethanpräpolymer umgesetzt wird und
(B4) ein Teil oder alle Isocyanatgruppen des isocyanatgruppenhaltigen kettenverlängerten Polyurethanpräpolymers (B3) mit einem Blockierungsmittel blockiert wird oder werden, wodurch ein Polyurethan mit blockierten lsocyanatgruppen resultiert, wonach gegebenenfalls
(B5) noch vorhandene freie Isocyanatgruppen in dem Polyurethan (B4) mit einem Kettenverlängerungsmittel umgesetzt werden.

2. Beschichtungsstoff nach Anspruch 1, **dadurch gekennzeichnet, daß** die Bindemittelkomponente (A) eine OH-Zahl von 30 bis 160 besitzt.

3. Beschichtungsstoff nach Anspruch 1 oder 2, **dadurch gekennzeichnet, daß** die Bindemittelkomponente (A) ein zahlenmittleres Molekulargewicht von 500 bis 20.000 besitzt.

4. Beschichtungsstoff nach einem der Ansprüche 1 bis 3, **dadurch gekennzeichnet, daß** die Bindemittelkomponente (A) ein zahlenmittleres Molekulargewicht von 800 und 5.000 besitzt.

5. Beschichtungsstoff nach einem der Ansprüche 1 bis 4, **dadurch gekennzeichnet, daß** die Bindemittelkomponente (A) herstellbar ist, indem ein Polyol oder eine Mischung von Polyolen mit einem zahlenmittleren Molekulargewicht von 100 bis 5.000 mit einem Polyisocyanat oder einer Mischung aus Polyisocyanaten umgesetzt wird wobei das Polyol und das Polyisocyanat hinsichtlich Struktur und Mengenverhältnisse mit der Maßgabe ausgewählt sind, daß die Bindemittelkomponente (A) eine OH-Zahl von 30 bis 160 aufweist.

6. Beschichtungsstoff nach einem der Ansprüche 1 bis 5, **dadurch gekennzeichnet, daß** die Bindemittelkomponente (A) herstellbar ist, indem ein Polyol oder eine Mischung von Polyolen mit einem zahlenmittleren Molekulargewicht von 150 bis 2.000, mit einem Polyisocyanat oder einer Mischung aus Polyisocyanaten umgesetzt wird wobei das Polyol und das Polyisocyanat hinsichtlich Struktur und Mengenverhältnisse mit der Maßgabe ausgewählt sind, daß die Bindemittelkomponente (A) eine OH-Zahl von 60 bis 110 aufweist.

7. Beschichtungsstoff nach einem der Ansprüche 1 bis 6, **dadurch gekennzeichnet, daß** das zur Herstellung der Bindemittelkomponente (A) verwendete Polyol ein Polyesterpolyol ist, welches ein zahlenmittleres Molekulargewicht von 250 bis 5.000 aufweist.

8. Beschichtungsstoff nach Anspruch 7, **dadurch gekennzeichnet, daß** das Polyesterpolyol herstellbar ist aus Monomeren, welche ausgewählt sind aus der Gruppe bestehend aus "Adipinsäure, Dimerfettsäuren und Hexandiol".

9. Beschichtungsstoff nach einem der Ansprüche 1 bis 8, **dadurch gekennzeichnet, daß** das in Stufe (B1) eingesetzte Polyol herstellbar ist aus Monomeren, welche ausgewählt sind aus der Gruppe bestehend aus "Isophthalsäure, Dimerfettsäuren, Hexandiol".

10. Beschichtungsstoff nach einem der Ansprüche 1 bis 9, **dadurch gekennzeichnet, daß** das in Stufe (B1) eingesetzte Polyol ein zahlenmittleres Molekulargewicht von 1.000 bis 2.000 aufweist.

11. Beschichtungsstoff nach einem der Ansprüche 1 bis 10, **dadurch gekennzeichnet, daß** das in Stufe (B1) und/oder (B2) eingesetzte Polyisocyanat ein Diisocyanat und/oder ein isocyanurat ist.

12. Beschichtungsstoff nach einem der Ansprüche 1 bis 11, **dadurch gekennzeichnet, daß** das in Stufe (B1) und/oder (B2) eingesetzte Polyisocyanat ein Alkyl- oder Cycloalkyldiisocyanat, und/oder Isocyanurat eines Alkyl- oder Cycloalkyldiisocyanats ist.

13. Beschichtungsstoff nach einem der Ansprüche 1 bis 12, **dadurch gekennzeichnet, daß** das Blockierungsmittel ein Oxim ist.

14. Beschichtungsstoff nach einem der Ansprüche 1 bis 13, **dadurch gekennzeichnet, daß** das Blockierungsmittel ein Ketoxim, ist.

15. Beschichtungsstoff nach einem der Ansprüche 1 bis 14, **dadurch gekennzeichnet, daß** das Aminoplastharz ein Melaminformaldehydharz ist, welches bei Temperaturen von 100°C bis 180°C gegenüber OH-Gruppen reaktiv ist.

16. Beschichtungsstoff nach einem der Ansprüche 1 bis 15, **dadurch gekennzeichnet, daß** die Bindemittelkomponente (D) zumindest zum Teil aus einem epoxidharzmodifizierten, Wasserverdünnbaren Polyester besteht, der herstellbar ist, indem
(D1) aus
(D1.1) mindestens einer mindestens drei Carboxylgruppen enthaltenden Polycarbonsäure oder einem reaktiven Derivat dieser Säure und/oder
(D1.2) mindestens einem mindestens eine Carboxylgruppe aufweisenden Polyol und
(D1.3) mindestens einer zwei Carboxylgruppen enthaltenden Polycarbonsäure oder einem reaktiven Derivat dieser Säure und
(D1.4) mindestens einem Polyol,
wobei mindestens 10 Mol% der eingesetzten Komponenten (D1.1), (D1.2), (D1.3) und (D1.4) (bezogen auf (D1.1) + (D1.2) + (D1.3) + (D1.4) = 100 Mol%) mindestens ein mindestens sechs C-Atome aufweisendes (cyclo-) aliphatisches Strukturelement enthalten,
ein Polyester synthetisiert wird, der ein zahlenmittleres Molekulargewicht von unter 2000, eine Säurezahl von 35 bis 240, eine OH-Zahl von 56 bis 320, aufweist und in dem alle (D1.1)- und (D1.3)-Komponenten über mindestens zwei Carboxylgruppen einkondensiert sind und
(D2) dieser so gewonnene Polyester anschließend mit 0,3 bis 1,5 Äduivalenten pro Polyestermolekül
(D2.1)eines ein Epoxidäquivalentgewicht von 170 bis 1000 aufweisenden Epoxidharzes auf Basis eines Bisphenols und/oder
(D2.2) einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt wird, der nach
(D3) Neutralisation von mindestens einem Teil der freien Carboxylgruppen in wasserverdünnbarer Form vorliegt.

17. Verwendung des Beschichtungsstoffs gemäß einem der Ansprüche 1 bis 16 in der Automobillackierung, der Lackierung von Möbeln und der industriellen Lackierung, inklusive Coil Coating und Container Coating zur Herstellung einer ein- oder mehrschichtigen Lackierung auf einem grundierten oder ungrundierten Substrat.

18. Die Verwendung des Beschichtungsstoffs nach Anspruch 17, **dadurch gekennzeichnet, daß** der Beschichtungsstoff zur Herstellung einer Fülierschicht und/oder einer Steinschlagschutzschicht dient.

19. Grundierte oder ungrundierte Substrate enthaltend mindestens eine energieabsorbierende Lackierung, mindestens eine farb- und/oder effektgebende Decklackierung oder Wasserbasislackierung und/oder mindestens eine Klarlackierung, **dadurch gekennzeichnet, daß** mindestens eine der Lackierungen aus dem Beschichtungsstoff gemäß einem der Ansprüche 1 bis 16 hergestellt worden ist.

## Claims

1. An aqueous coating material comprising
(A) a water-dispersible hydroxy-functional binder component containing urethane groups,
(B) a water-dispersible binder component containing urethane groups and blocked isocyanate groups,
(C) a water-dispersible amino resin,
(D) optionally, a water-dispersible hydroxy-functional polyester, and
(E) optionally, customary coatings additives
**characterized in that**
the binder component (B) is preparable by
(B1) preparing a polyurethane prepolymer containing isocyanate groups from a polyol or mixture of polyols and from a polyisocyanate or mixture of polyisocyanates,
(B2) reacting the polyurethane prepolymer (B1) containing isocyanate groups by means of a chain extender to give a hydroxyl-containing chain-extended polyurethane prepolymer,
(B3) reacting the hydroxyl-containing chain-extended polyurethane prepolymer (B2) with a polyisocyanate or mixture of polyisocyanates to give a further polyurethane prepolymer containing isocyanate groups, and
(B4) blocking some or all of the isocyanate groups of the chain-extended polyurethane prepolymer (B3) containing isocyanate groups with a blocking agent to give a polyurethane containing blocked isocyanate groups, and then, where appropriate,
(B5) reacting remaining free isocyanate groups in the polyurethane (B4) with a chain extender.

2. The coating material as claimed in claim 1, **characterized in that** the binder component (A) possesses an OH number of from 30 to 160.

3. The coating material as claimed in claim 1 or 2, **characterized in that** the binder component (A) possesses a number-average molecular weight of from 500 to 20 000.

4. The coating material as claimed in one of claims 1 to 3, **characterized in that** the binder component (A) possesses a number-average molecular weight of from 800 to 5000.

5. The coating material as claimed in one of claims 1 to 4, **characterized in that** the binder component (A) is preparable by reacting a polyol or mixture of polyols having a number-average molecular weight of from 100 to 5000 with a polyisocyanate or a mixture of polyisocyanates, the structure and proportions of the polyol and polyisocyanate being selected subject to the proviso that the binder component (A) has an OH number of from 30 to 160.

6. The coating material as claimed in one of claims 1 to 5, **characterized in that** the binder component (A) is preparable by reacting a polyol or mixture of polyols having a number-average molecular weight of from 150 to 2000 with a polyisocyanate or a mixture of polyisocyanates, the structure and proportions of the polyol and polyisocyanate being selected subject to the proviso that the binder component (A) has an OH number of from 60 to 110.

7. The coating material as claimed in one of claims 1 to 6, **characterized in that** the polyol used to prepare the binder component (A) is a polyesterpolyol which has a number-average molecular weight of from 250 to 5000.

8. The coating material as claimed in claim 7, **characterized in that** the polyesterpolyol is preparable from monomers which are selected from the group consisting of "adipic acid, dimer fatty acids and hexanediol".

9. The coating material as claimed in one of claims 1 to 8, **characterized in that** the polyol used in stage (B1) is preparable from monomers which are selected from the group consisting of "isophthalic acid, dimer fatty acids, hexanediol".

10. The coating material as claimed in one of claims 1 to 9, **characterized in that** the polyol used in stage (B1) has a number-average molecular weight of from 1000 to 2000.

11. The coating material as claimed in one of claims 1 to 10, **characterized in that** the polyisocyanate used in stage (B1) and/or (B2) is a diisocyanate and/or an isocyanurate.

12. The coating material as claimed in one of claims 1 to 11, **characterized in that** the polyisocyanate used in stage (B1) and/or (B2) is an alkyl or cycloalkyl diisocyanate, and/or isocyanurate of an alkyl or cycloalkyl diisocyanate.

13. The coating material as claimed in one of claims 1 to 12, **characterized in that** the blocking agent is an oxime.

14. The coating material as claimed in one of claims 1 to 13, **characterized in that** the blocking agent is a ketoxime.

15. The coating material as claimed in one of claims 1 to 14, **characterized in that** the amino resin is a melamine-formaldehyde resin which is reactive toward OH groups at temperatures of from 100°C to 180°C.

16. The coating material as claimed in one of claims 1 to 15, **characterized in that** the binder component (D) is compcsed at least in part of an epoxy-resin-modified, water-dilutable polyester which is preparable by
(D1) using
(D1.1) at least one polycarboxylic acid containing at least three carboxyl groups, or a reactive derivative of this acid, and/or
(D1.2) at least one polyol containing at least one carboxyl group and
(D1.3) at least one polycarboxylic acid containing two carboxyl groups, or a reactive derivative of this acid, and
(D1.4) at least one polyol
at least 10 mol% of the components (D1.1), (D1.2), (D1.3) and (D1.4) used (based on (D1.1) + (D1.2) + (D1.3) + (D1.4) = 100 mol%) containing at least one (cyclo)aliphatic structural element containing at least six carbon atoms,
to synthesize a polyester which has a number-average molecular weight of less than 2000, an acid number of from 35 to 240, an OH number of from 56 to 320, and in which all (D1.1) and (D1.3) components are incorporated by condensation via at least two carboxyl groups, and
(D2) then reacting this polyester thus obtained with from 0.3 to 1.5 equivalents per polyester molecule
(D2.1) of an epoxy resin which has an epoxide equivalent weight of from 170 to 1000, and is based on a bisphenol, and/or
(D2.2) a derivative of this epoxy resin that contains at least one epoxide group per molecule
under reaction conditions in which substantially only carboxyl groups react with epoxide groups, to give an epoxy-resin-modified polyester, which following
(D3) neutralization of at least some of the free carboxyl groups is present in water-dilutable form.

17. The use of the coating material as claimed in one of claims 1 to 16 in automotive finishing, the varnishing of furniture, and industrial coating, including coil coating and container coating, for producing a single-coat or multicoat paint system on a primed or unprimed substrate.

18. The use of the coating material as claimed in claim 17, **characterized in that** the coating material serves to produce a surfacer coat and/or an antistonechip coat.

19. Primed or unprimed substrates comprising at least one energy-absorbing paint system, at least one color and/or effect topcoat or aqueous basecoat and/or at least one clearcoat, **characterized in that** at least one of the coats or paint systems has been produced from the coating material as claimed in one of claims 1 to 16.

## Revendications

1. Substance aqueuse de revêtement, contenant
(A) un composant de liant à fonction hydroxy contenant des groupes uréthanes pouvant être dispersé dans l'eau,
(B) un composant de liant contenant des groupes uréthanes pouvant être dispersé dans l'eau, comportant des groupes isocyanates bloqués,
(C) une résine aminoplaste pouvant être dispersée dans l'eau,
(D) en option, un polyester à fonction hydroxy pouvant être dispersé dans l'eau et
(E) en option, des additifs classiques de laques,
**caractérisée en ce que**
le composant de liant (B) peut être préparé en
(B1) préparant un prépolymère de polyuréthane contenant des groupes isocyanates à partir d'un polyol ou d'un mélange de polyols ainsi que d'un polyisocyanate ou d'un mélange de polyisocyanates,
(B2) transformant le prépolymère de polyuréthane contenant des groupes isocyanates (B1) à l'aide d'un agent de prolongation de chaîne pour former un prépolymère de polyuréthane à chaîne prolongée contenant des groupes hydroxyles,
(B3) transformant le prépolymère de polyuréthane à chaîne prolongée contenant des groupes hydroxyles (B2) avec un polyisocyanate ou un mélange de polyisocyanates pour former un autre prépolymère de polyuréthane contenant des groupes isocyanates et
(B4) bloquant la totalité ou une partie des groupes isocyanates du prépolymère de polyuréthane à chaîne prolongée contenant des groupes isocyanates (B3) avec un agent bloquant, ce qui produit un polyuréthane à groupes isocyanates bloqués, et ensuite le cas échéant
(B5) en transformant les groupes isocyanates libres encore présents en polyuréthane (B4) avec un agent de prolongation de chaîne.

2. Substance de revêtement selon la revendication 1, **caractérisée en ce que** le composant de liant (A) possède un indice OH de 30 à 160.

3. Substance de revêtement selon la revendication 1 ou 2, **caractérisée en ce que** le composant de liant (A) possède un poids moléculaire moyen de 500 à 20.000.

4. Substance de revêtement selon une des revendications 1 à 3, **caractérisée en ce que** le composant de liant (A) possède un poids moléculaire moyen de 800 et 5.000.

5. Substance de revêtement selon une des revendications 1 à 4, **caractérisée en ce que** le composant de liant (A) peut être préparé en transformant un polyol ou un mélange de polyols d'un poids moléculaire moyen de 100 à 5.000 avec un polyisocyanate ou un mélange de polyisocyanates, tout en choisissant le polyol et le polyisocyanate au niveau de leur structure et de leurs rapports quantitatifs de telle sorte que le composant de liant (A) présente un indice OH de 30 à 160.

6. Substance de revêtement selon une des revendications 1 à 5, **caractérisée en ce que** le composant de liant (A) peut être préparé en transformant un polyol ou un mélange de polyols d'un poids moléculaire moyen de 10 à 2.000 avec un polyisocyanate ou un mélange de polyisocyanates, tout en choisissant le polyol et le polyisocyanate au niveau de leur structure et de leurs rapports quantitatifs de telle sorte que le composant de liant (A) présente un indice OH de 60 à 110.

7. Substance de revêtement selon une des revendications 1 à 6, **caractérisée en ce que** le polyol utilisé pour la préparation du composant de liant (A) est un polyol de polyester qui présente un poids moléculaire moyen de 250 à 5.000.

8. Substance de revêtement selon la revendication 7, **caractérisée en ce que** le polyol de polyester peut être préparé à partir de monomères qui sont sélectionnés dans le groupe consistant en « acide adipique, acides gras dimères et hexanediol ».

9. Substance de revêtement selon une des revendications 1 à 8, **caractérisée en ce que** le polyol utilisé au niveau (B1) peut être préparé à partir de monomères qui sont sélectionnés dans le groupe consistant .en « acide isophtalique, acides gras dimères, hexanediol ».

10. Substance de revêtement selon une des revendications 1 à 9, **caractérisée en ce que** le polyol utilisé au niveau (B1) présente un poids moléculaire moyen de 1.000 à 2.000.

11. Substance de revêtement selon une des revendications 1 à 10, **caractérisée en ce que** le polyisocyanate utilisé au niveau (B1) et/ou (B2) est un diisocyanate et/ou un isocyanurate.

12. Substance de revêtement selon une des revendications 1 à 11, **caractérisée en ce que** le polyisocyanate utilisé au niveau (B1) et/ou (B2) est un alkyl- ou cycloalkyldiisocyanate et/ou un isocyanurate d'un alkyl- ou cycloalkyldiisocyanate.

13. Substance de revêtement selon une des revendications 1 à 12, **caractérisée en ce que** l'agent bloquant est un oxime.

14. Substance de revêtement selon une des revendications 1 à 13, **caractérisée en ce que** l'agent bloquant est un cétoxime.

15. Substance de revêtement selon une des revendications 1 à 14, **caractérisée en ce que** la résine aminoplaste est une résine formaldéhyde mélaminique, qui est réactive à des températures de 100°C à 180°C par rapport aux groupes OH.

16. Substance de revêtement selon une des revendications 1 à 15, **caractérisée en ce que** le composant de liant (D) consiste du moins en partie en un polyester diluable à l'eau modifié à la résine époxyde, qui peut être préparé suivant une méthode consistant **en ce que**,
(D1) en partant
(D1.1) d'au moins un acide polycarboxylique contenant au moins trois groupes carboxyle ou d'un dérivé réactif de cet acide et/ou
(D1.2) d'au moins un polyol présentant au moins un groupe carboxyle et
(D1.3) d'un acide polycarboxylique contenant au moins deux groupes carboxyle ou d'un dérivé réactif de cet acide et
(D1.4) d'au moins un polyol,
au moins 10 % en moles de composant
utilisés (D1.1), (D1.2), (D1.3) et (D1.4) (rapporté à (D1.1) + (D1.2) + (D1.3) + (D1.4) = 100 % en moles) contenant au moins un élément structurel (cyclo)aliphatique présentant six atomes de C,
on synthétise un polyester qui présente un poids moléculaire moyen inférieur à 2000, un indice d'acidité de 35 à 240, un indice OH de 56 à 320 et dans lequel tous les composants (D1.1) et (D1.3) sont condensés par l'intermédiaire d'au moins deux groupes carboxyles, et
(D2) ce polyester ainsi obtenu est ensuite transformé avec 0,3 à 1,5 équivalents par molécule de polyester
(D2.1) d'une résine époxyde à base de bisphénol présentant un poids équivalent en époxyde de 170 à 1000 et/ou
(D2.2) avec un dérivé de cette résine époxyde contenant au moins un groupe époxyde par molécule, dans des conditions de réaction dans lesquelles seuls substantiellement les groupes carboxyles réagissent avec les groupes époxydes, pour obtenir un polyester modifié à la résine époxyde, qui après
(D3) neutralisation d'au moins une partie des groupes carboxyles libres se présente sous forme diluable dans l'eau.

17. Utilisation de la substance de revêtement selon une des revendications 1 à 16 dans la peinture des automobiles, la peinture de meubles et la peinture industrielle, y compris le couchage sur bande et le placage de contenants pour l'élaboration d'une peinture en une ou plusieurs couches sur un substrat comportant ou non une couche de fond.

18. Utilisation de la substance de revêtement selon la revendication 17, **caractérisée en ce que** la substance de revêtement sert à la fabrication d'une couche de remplissage et/ou d'une couche antigravillonnage.

19. Substrats comportant ou non une couche de fond contenant au moins une laque absorbant l'énergie, au moins une laque de finition colorante et/ou à effets ou une laque de base aqueuse et/ou au moins une laque transparente, **caractérisés en ce qu'**au moins une des laques de la substance de revêtement a été fabriquée selon une des revendications 1 à 16.
